# EUROPEAN PATENT SPECIFICATION

(11) **EP 3 272 572 B1**
(45) Date of publication and mention of the grant of the patent: **18.11.2020**
(21) Application number: 15885612.0
(22) Date of filing: 25.12.2015
(51) Int. Cl.: B60L 3/00, A61G 5/04

(54) **MOVING BODY**
BEWEGLICHER KÖRPER
CORPS MOBILE

(30) Priority: 16.03.2015 JP 2015052531
(43) Date of publication of application: 24.01.2018
(73) Proprietor: Aisin Seiki Kabushiki Kaisha, Kariya-shi, Aichi 448-8650 (JP); Witz Corporation, Nagoya-shi, Aichi 460-0008 (JP); Chiba Institute of Technology, Narashino-shi, Chiba 275-0016 (JP)
(72) Inventor: ANDO, Mitsuhiro, Kariya-shi Aichi 448-8650 (JP); OCHIAI, Hirotoshi, Kariya-shi Aichi 448-8650 (JP); MATSUMOTO, Tetsuaki, Nagoya-shi Aichi 460-0008 (JP); MIZUNO, Tomohito, Nagoya-shi Aichi 460-0008 (JP); FURUTA, Takayuki, Narashino-shi Chiba 275-0016 (JP); SHIMIZU, Masaharu, Narashino-shi Chiba 275-0016 (JP); YAMATO, Hideaki, Narashino-shi Chiba 275-0016 (JP); TODA, Kengo, Narashino-shi Chiba 275-0016 (JP); KODACHI, Takashi, Narashino-shi Chiba 275-0016 (JP)
(74) Representative: Kramer Barske Schmidtchen Patentanwälte PartG mbB
(86) International application number: PCT/JP2015/086292
(87) International publication number: WO 2016/147520

(56) References cited:
- EP-A1- 1 911 427
- JP-A- H0 646 502
- JP-A- H0 928 737
- JP-A- H0 928 737
- JP-A- 2010 273 500
- US-A1- 2013 080 015
- US-A1- 2013 080 015
- US-A1- 2013 080 015

## Description

### [Technical Field]

This invention relates to a movable body, particularly to a movable body that travels by an operation of an occupant thereof.

### [Background Art]

As one form of a movable body which travels by an operation thereof, a movable body disclosed in Patent Literature 1 has been known. For example, in a movable body, such as an electric wheel chair, in order to improve the safety, a relatively high reliability is required for a structure of a failure detecting device which detects a failure in travelling function of the movable body. As indicated in Fig. 1 of the Patent Literature 1, the movable body, which is applied to an electric wheel chair, includes, as a failure detecting structure of travelling function, a drive control circuit 1 which integrates control of the movable body, a battery 2 which is an electric source of the movable body, a motor 3 which drives the movable body to travel, an encoder 4 which detects the number of rotations of the motor 3 and a motor current detecting means 5 which detects the current value of the motor 3. Further, the drive control circuit 1 presumes the number of rotations of the motor 3 from the voltage value of the battery 2, the current value detected by the motor current detecting means 5 and an armature resistance Ra and an induced voltage constant Ke of the motor 3 memorized in advance. The drive control circuit 1 compares a presumed number of rotations, which is the presumed number of rotations of the motor, with an actual number of rotations which is the actual number of rotations of the motor 3 detected by the encoder 4. The drive control circuit 1 judges that the encoder 4 is in failure when the difference between the presumed number of rotations and the actual number of rotations maintains the value equal to or more than a predetermined value for consecutively a predetermined time period. Thus, the movable body according to the Patent Literature 1 can judge whether the encoder 4 is in failure or not by the drive control circuit 1. However, if the drive control circuit 1 per se is in failure, the presumed number of rotations may not be correctly presumed. In such case, the drive control circuit 1 cannot detect that the encoder 4 is in failure. Accordingly, in order to achieve a relatively high reliability in the structure of the failure detection, a device which detects failure of the control circuit has to be provided separately.

One form of the failure detectible system disclosed in the Patent Literature 2 has been known. As shown in Fig. 1 of the Patent Literature 2, the system 1 includes a dual system D formed by a sub-system A and a sub-system B to which the input U from a controller C is respectively inputted, a calculation model X which is the transfer function model of either the sub-system A or the sub-system B and a judgement selecting portion G which judges whether or not a failure exists in either one of the sub-systems A and B and outputs the output value from the normally operated sub-system as the output value of the system. The judgement selecting portion G judges whether or not a failure exists in the sub-system A or the sub-system B according to the majority rules, comparing the outputs QA and QB which are the outputs from the sub-system A and sub-system B and the pseudo output P which is the output of the calculation model X to which the input U is inputted. The judgement selecting portion G make a judgement presuming that the pseudo output P is always a correct value. According to this system 1, a failure judgement for the system can be made without using a sensor.

### [Citation List]

### [Patent Literature]

[Patent Literature 1] JP2001 - 79041 A
[Patent Literature 2] JP2006 - 228002 A

US 2013/0080015 A1 discloses a motorized wheelchair including left and right drive wheels, left and right motors, rate-of-turn sensors, first and second speed sensors, and a controller arranged to combine signals from the sensors in a manner that detects drift. Alternatively, the motorized wheelchair includes a controller arranged to combine signals from the sensors in a manner that compensates for voltage offset errors. In another arrangement, the motorized wheelchair includes an input device and a controller arranged to combine signals from the sensors and the input device in a manner that controls the motors using an integrated turn rate error. Several methods for controlling each wheelchair configuration are provided, which methods process signals associated with desired, expected, or actual turn rate to determine if the wheelchair is off course.

JP H09 28737 A relates to an automatic drivable electric wheelchair capable of being quickly stopped in the case that one of the wheels is locked.

### [Summary of Invention]

### [Technical Problem(s)]

A failure of the control circuit can be detected by the system disclosed in the Patent Literature 2. However, the system of the Patent Literature 2 needs to structure a dual system and accordingly, the number of parts becomes relatively large. Further, in order to achieve a failure detection of the travelling function of a movable body, the structure of the failure detection of the driving device which drives the movable body to travel disclosed in the Patent Literature 1 and the structure of failure detection of the control circuit disclosed in the Patent Literature 2 have to be combined, which may lead to further increase of the number of parts by adopting a plurality of sensors and the sub-systems of dual system. Thus, the cost of the movable body becomes high.

This invention was made to solve the above problems and the object of the invention is to provide a failure detection structure which detects a failure in travelling function of the movable body with low cost.

### [Solution to Problem(s)]

The problem is solved by a movable body as defined by claim 1. The movable body according to claim 1 is characterized in that the movable body, having a travelling function, travels by a driving device which is connected to an electric source and is driven according to an operation signal which corresponds to an operation amount to an operating device operated by an occupant of the movable body. The movable body includes a disconnecting device which electrically connects or disconnects the electric source with or from the driving device, an actual driving amount detecting device which detects an actual driving amount which corresponds to an actual driving amount of the driving device, a control device which includes a travelling control portion which sets a target driving amount of the driving device based on the operation signal sent from the operating device and controls a travelling of the movable body by outputting a drive signal which corresponds to the target driving amount to the driving device, a failure detecting portion which detects a failure in the traveling function and a disconnecting control portion which electrically disconnects the driving device from the electric source by the disconnecting device when the failure in the travelling function is detected by the failure detecting portion. The failure detecting portion of the movable body includes a first speed presuming portion which presumes a speed of the movable body based on the operation signal sent from the operating device, a second speed presuming portion which presumes a speed of the movable body based on the detection signal corresponding to the actual driving amount detected by the actual driving amount detecting device, a speed difference calculating portion which calculates a speed difference between a first presumed speed which corresponds to the speed of the movable body presumed by the first speed presuming portion and a second presumed speed which corresponds to the speed of the movable body presumed by the second speed presuming portion and a failure judging portion which judges that a failure exists in the travelling function when the speed difference calculated by the speed difference calculating portion is equal to or more than a speed difference judging value.

### [Advantageous Effect of Invention]

According to the invention described above, for example, if a failure occurs in the driving device which forms the travelling function of the movable body or in an electric power supply state that the electric power is supplied to the respective devices, the speed difference between the first presumed speed of the movable body presumed based on the control signal sent from the operating device and the second presumed speed of the movable body presumed based on the detection signal detected by the actual driving amount detecting device becomes large compared to the difference when a failure is not occurring. When the speed difference becomes equal to or more than a speed difference judging value, the control device detects that a failure in the travelling function of the movable body is present and disconnects the supply of electric power to the driving device. Accordingly, a failure in travelling function of the movable body can be detected without providing a plurality of sensors or without forming dual sub-system structure as seen in the above explained conventional technology, which leads to simplifying of the structure of the failure detection, compared to the failure detection structure disclosed in the conventional technology. Thus, the structure of the failure detection of travelling function of the movable body can be provided with low cost.

### [Brief Explanation of Drawings]

[Fig. 1] Fig. 1 is an outline view of a structure of a movable body according to a first embodiment of the invention;
[Fig. 2] Fig. 2 is a block diagram of the movable body shown in Fig. 1;
[Fig. 3] Fig. 3 is a schematic view of an operation amount of an operating device of Fig. 1 and vertical axis indicates a front/rear direction of a movable body and a horizontal axis indicates a right/left direction of the movable body;
[Fig. 4A] Fig. 4A is a first map memorized in a first control device shown in Fig. 2, indicating a relationship among a desired straight traveling speed, a target straight traveling speed and a first presumed straight traveling speed of the movable body;
[Fig. 4B] Fig. 4B is a second map memorized in the first control device shown in Fig. 2, indicating a relationship among a desired turning speed, a target turning speed and a first presumed turning speed of the movable body;
[Fig. 5A] Fig. 5A is a third map memorized in the first control device shown in Fig. 2, indicating a relationship among the target straight traveling speed and the second presumed straight traveling speed, a target driving amount total value which is the total of the left target driving amount and the right target driving amount and an actual driving amount total value which is the total of the left actual driving amount and the right actual driving amount.
[Fig. 5B] Fig. 5B is a fourth map memorized in the first control device shown in Fig. 2, indicating a relationship among a target turning speed and a second presumed turning speed, a target driving amount difference which is a value obtained by subtracting the left target driving amount and the right target driving amount and an actual driving amount difference which is a value obtained by subtracting the right actual driving amount from the left actual diving amount;
[Fig. 6] Fig. 6 is a flowchart of the program executed at the second control device shown in Fig. 2;
[Fig. 7] Fig. 7 is a block diagram showing a first modified embodiment of the movable body according to the invention; and
[Fig. 8] Fig. 8 is a flowchart of the program executed by the second control device shown in Fig. 7.
[Fig. 9] Fig. 9 is a flowchart of the program executed by the second control device shown in Fig. 7.

### [Preferred Embodiments Implemented by Invention]

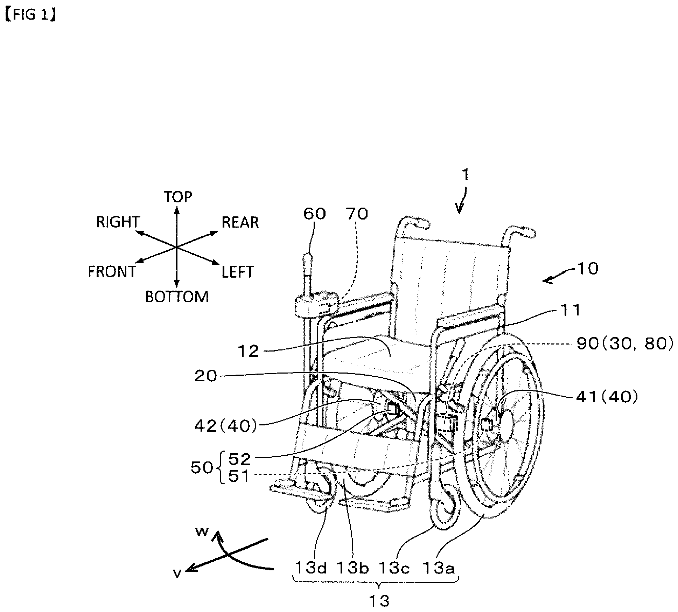

One embodiment of the movable body according to the invention will be explained hereinafter with reference to the attached drawings. As an example of the movable body according to the embodiment, an electric wheel chair 1 shown in Fig. 1 will be explained. It is noted that for the purpose of illustration, the explanation will be made assuming that the top side and bottom side of Fig. 1 indicate the upper side and lower side of the electric wheel chair 1. Similarly, the bottom left side and the top right side of Fig. 1 indicate the front side and rear side of the electric wheel chair 1, respectively and the top left side and the bottom right side of Fig. 1 indicate the right side and the left side of the electric wheel chair 1, respectively. The arrows in Fig. 1 indicate respective directions.

The electric wheel chair 1 includes a wheel chair main body 10, an electric source 20, a disconnecting device 30, a driving device 40, an actual driving amount detecting device 50, an operating device 60, a first control device 70 and a second control device 80. The electric wheel chair 1 includes a travelling function by which the electric wheel chair 1 travels, driven by the driving device 40 which is connected to the electric source 20 and is driven based on an operation signal corresponding to the operating amount of the operating device 60 operated by the occupant of the electric wheel chair 1. The electric source 20, the disconnecting device 30, the driving device 40, the actual driving amount detecting device 50, the operating device 60, the first control device 70 and the second control device 80 are installed to the wheel chair main body 10.

The wheel chair main body 10 includes a frame 11, a seat 12 on which the occupant is seated and wheels 13, as shown in Fig. 1. The seat 12 and the wheels 13 are assembled to the frame 11. The wheels 13 are structured to be rotatable about the respective rotation axes. The wheels 13 are arranged at the right side and the left side of the wheel chair main body 10 and includes a left drive wheel 13a and a right drive wheel 13b which are driven by the driving device 40 and a left auxiliary wheel 13c and a right auxiliary wheel 13d for auxiliary supporting the traveling of the electric wheel chair 1.

The electric source 20 supplies the driving device 40, the actual driving amount detecting device 50, the operating device 60, the first control device 70 and the second control device 80 with the electric power via the electric source path Ld (indicated with the double lines). The electric source 20 is for example, a battery. The electric power of the electric source 20 is supplied to the driving device 40 via the disconnecting device 30.

The disconnecting device 30 is a device which electrically connects the electric source 20 with or disconnects the electric source 20 from the driving device 40. The disconnecting device 30 is for example, a normally open type switch which is open under a non-operated state. When the disconnecting device 30 becomes in a closed state, the electric source 20 and the driving device 40 are electrically connected and the electric power is supplied from the electric source 20 to the driving device 40. On the other hand, when the disconnecting device 30 becomes in an open state, the electric source 20 and the driving device 40 are disconnected electrically and the electric power supply to the driving device 40 stops.

The driving device 40 drives the drive wheels 13a and 13b, respectively to rotate, thereby to drive the electric wheel chair 1 to travel. For example, the driving device 40 is structured by combination of an electric motor (not shown) and a reduction gear (not shown). The driving device 40, as shown in Fig. 1, includes a left driving device 41 which drives the left drive wheel 13a to rotate and a right driving device 42 which drives the right drive wheel 13b to rotate.

The actual driving amount detecting device 50 is a device which detects the actual driving amount which corresponds to the actual driving amount of the driving device 40. The actual driving amount detecting device 50 is, for example, formed by a rotation sensor which detects the number of rotations and the direction of the rotation of the electric motor forming the driving device 40. The actual driving amount detecting device 50 detects the actual driving amount every first predetermined time T1. The first predetermined time T1 is for example, set to be one fifth of a second. The actual driving amount detecting device 50 includes a left actual driving amount detecting device 51 which detects the left actual driving amount LRr which corresponds to the actual driving amount of the left driving device 41 and a right actual driving amount detecting device 52 which detects the right actual driving amount RRr which corresponds to the actual driving amount of the right driving device 42.

The left actual driving amount detecting device 51 detects the left driving amount LRr as the positive value driving amount, when the left drive wheel 13a rotates in a counterclockwise direction (direction to advance the electric wheel chair 1 forward), as seen from the left side of the electric wheel chair 1. On the other hand, when the left drive wheel 13a rotates in a clockwise direction opposite to the counterclockwise direction, the left actual driving amount detecting device 51 detects the left driving amount LRr as the negative value driving amount. Further, the right actual driving amount detecting device 52 detects the right driving amount RRr as the positive value driving amount, when the right drive wheel 13b rotates in a clockwise direction (direction of advancing the electric wheel chair 1), as seen from the right side of the electric wheel chair 1. On the other hand, when the right drive wheel 13b rotates in a counterclockwise direction opposite to the clockwise direction, the right actual driving amount detecting device 52 detects the right driving amount RRr as the negative value driving amount.

The operating device 60 is operated by the occupant of the electric wheel chair 1 to give instructions to the electric wheel chair 1 regarding to the straight traveling speed "v" and the turning speed "w" (See Fig. 1). The straight traveling speed "v" and the turning speed "w" correspond to the "speed" of the invention. The straight traveling speed "v" is the speed of the electric wheel chair 1 travelling in a forward direction (front direction) and the turning speed "w" is the angular speed of the electric wheel chair 1 turning about the center of gravity of the electric wheel chair 1 at the position where the electric wheel chair is positioned. According to this embodiment, the operating device 60 is a joystick. The non-operable position (hereinafter referred to as "neutral position") of the operating device 60 is set to be in an erected state in a vertical direction.

The operating device 60 is operated by inclining the joystick from the neutral position by the occupant of the wheel chair 1. The amount of operation of the operating device 60 can be expressed by the coordinates at the tip end of the operating device 60, when the operating device 60 is projected on the XY plane which is parallel to the horizontal plane. The X-axis is the same with the front/rear direction with respect to the wheel chair 1 and the positive direction of the X-axis is the front direction of the electric wheel chair 1. The Y-axis is the same with the right/left direction with respect to the wheel chair 1 and the positive direction of the Y-axis is the right direction of the electric wheel chair 1. The X-axis value of the coordinates is a desired straight travelling speed "xjs" which corresponds to the straight travelling speed of the electric wheel chair 1 desired by the occupant thereof. The Y-axis value of the coordinates is a desired turning speed "yjs" which corresponds to the turning speed of the electric wheel chair 1 desired by the occupant thereof. The desired straight travelling speed "xjs" and the desired turning speed "yjs" are outputted to the first and the second control devices 70 and 80 every first predetermined time T1, as the control signal corresponding to the operating amount by the occupant to the operating device 60, as the operation signal.

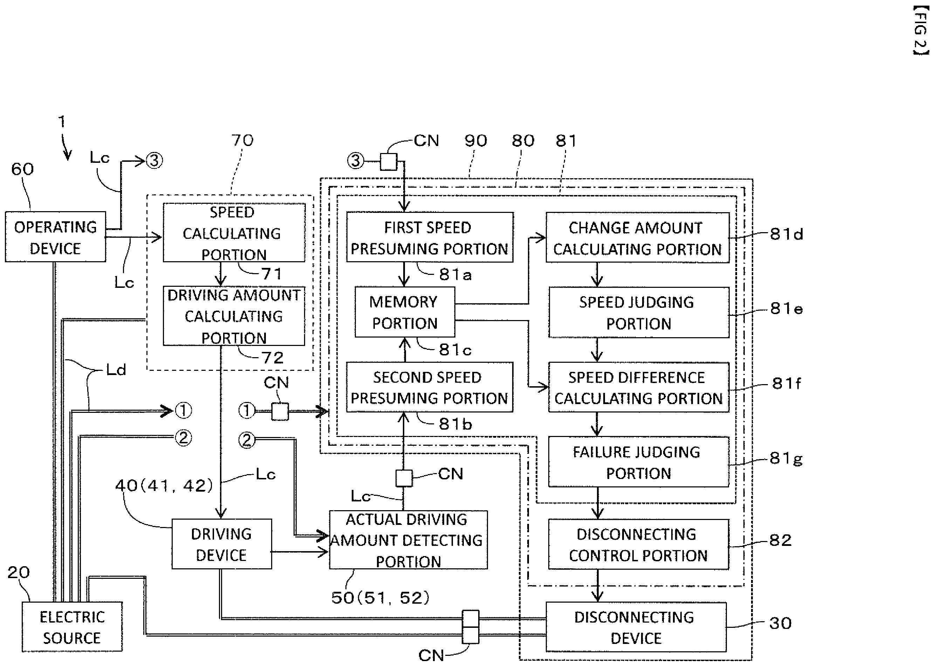

The first control device 70 controls the travelling of the electric wheel chair 1 by setting the target driving amount of the driving device 40 based on the operation signal sent from the operating device 60 and outputting the drive signal which corresponds to the target driving amount to the driving device 40. As shown in Fig. 2, the first control device 70 is connected to the driving device 40 and the operating device 60 via control signal paths Lc (indicated with fine lines). The first control device 70 includes a speed calculating portion 71 and a driving amount calculating portion 72. The speed calculating portion 71 and the driving amount calculating portion 72 correspond to the travelling control portion of the present invention.

The traveling control by the first control device 70 for controlling the electric wheel chair 1 to travel will be explained hereinafter. The travelling control by the first control device 70 starts at the time when the operating device 60 is operated and the first control device 70 obtains the operation signal sent from the operating device 60. The operation signal is obtained by the speed calculating portion 71.

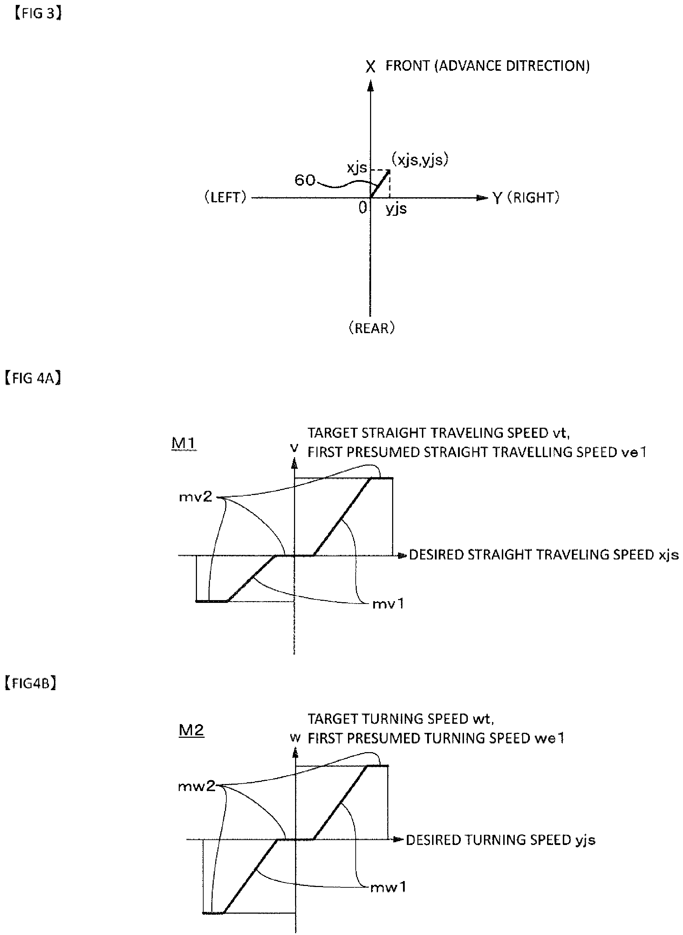

The speed calculating portion 71 calculates the target straight travelling speed "vt" and the target turning speed "wt" of the electric wheel chair 1 from the obtained operation signal (desired straight travelling speed "xjs" and desired turning speed "yjs"). The speed calculating portion 71 calculates the target straight travelling speed "vt" from the obtained desired straight travelling speed "xjs", based on the first map M1 indicated in Fig. 4A. The first map M1 indicates the relationship among the desired straight travelling speed "xjs", the target straight travelling speed "vt" and the first presumed straight travelling speed "ve1" which will be explained later). Further, the speed calculating portion 71 calculates the target turning speed "wt" from the obtained desired turning speed "yjs", based on the second map M2 indicated in Fig. 4B. The second map M2 indicates the relationship among the desired turning speed "yjs", the target turning speed "wt" and the first presumed turning speed "we1" which will be explained later). The first map M1 and the second map M2 are memorized in the memory portion (not shown) of the first control device 70.

As shown in Fig. 4A, the first map M1 has the proportional portions "mv1" where the desired straight travelling speed "xjs" and the target straight travelling speed "vt" are proportional and the dead portions "mv2" where the target straight travelling speed "vt" is constant regardless of the change of the value of the desired straight travelling speed "xjs". When the value of the target straight travelling speed "vt" is positive, the electric wheel chair 1 advances forward and when the value thereof is negative, the electric wheel chair 1 moves backward. Further, as shown in Fig. 4B, the second map M2 has the proportional portions "mw1" where the desired turning speed "yjs" and the target turning speed "wt" are proportional and the dead portions "mw2" where the target turning speed "wt" is constant regardless of the change of the value of the desired turning speed "yjs". When the value of the target turning speed "wt" is positive, the electric wheel chair 1 turns right and when the value thereof is negative, the electric wheel chair 1 turns left.

The driving amount calculating portion 72 calculates the target driving amount (target number of rotations) of the driving device 40 from the target straight travelling speed "vt" and the target turning speed "wt" calculated at the speed calculating portion 71. The driving amount calculating portion 72 calculates the left target driving amount LRt and the right target driving amount RRt as the target driving amount of the driving device 40. The left target driving amount LRt is the target driving amount of the left driving device 41 and the right target driving amount RRt is the target driving amount of the right driving device 42. It is noted that when the left target driving amount LRt is a positive value, the left driving device 41 drives the left drive wheel 13a to rotate in a counterclockwise direction (direction to advance the electric wheel chair 1 forward) when seen from the left side of the electric wheel chair 1. Further, when the right target driving amount RRt is a positive value, the right driving device 42 drives the right drive wheel 13b to rotate in a clockwise direction (direction to advance the electric wheel chair 1 forward), as seen from the right side of the electric wheel chair 1. Oppositely, when the left target driving amount LRt is a negative value, the left driving device 41 drives the left drive wheel 13a to rotate in the opposite direction to the direction explained above. Also, when the right target driving amount RRt is a negative value, the right driving device 42 drives the right drive wheel 13b to rotate in the opposite direction to the direction explained above.

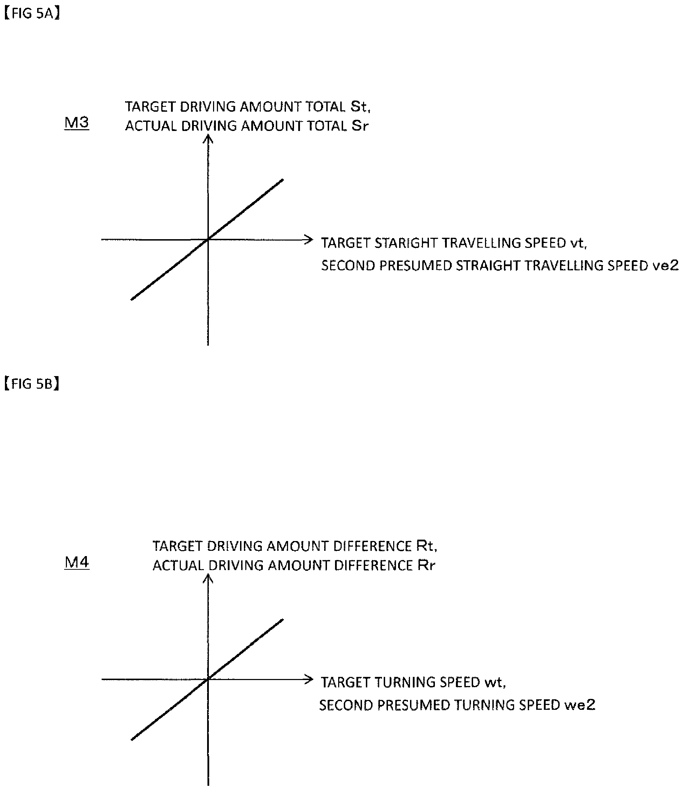

The driving amount calculating portion 72 calculates the left target driving amount LRt and the right target driving amount RRt from the target driving amount total value St and the target driving amount difference Rt. The target driving amount total value St is the total value of the left target driving amount LRt and the right target driving amount RRt. The target driving amount difference Rt is the value obtained by subtracting the right target driving amount RRt from the left target driving amount LRt. The driving amount calculating portion 72 calculates the target driving amount total value St from the target straight travelling speed "vt", based on the third map M3. As shown in Fig. 5A, the third map M3 indicates the relationship between the target straight travelling speed "vt" and the target driving amount total value St and the actual driving amount total value Sr (which will be explained later). According to the embodiment, the values of the target straight travelling speed "vt" and the target driving amount total value St are in a proportional relationship. Further, the driving amount calculating portion 72 calculates the target driving amount difference Rt from the target turning speed "wt", based on the fourth map M4. As shown in Fig. 5B, the fourth map M4 indicates the relationship between the target turning speed "wt" and the target driving amount difference Rt and the actual driving amount difference Rr (which will be explained later). According to the embodiment, the values of the target turning speed "wt" and the target driving amount difference Rt are in a proportional relationship. The third and the fourth maps M3 and M4 are prepared in advance actually measured by the experimental work or the like and memorized in the memory portion of the first control device 70.

The driving amount calculating portion 72 calculates the left target driving amount LRt and the right target driving amount RRt from thus derived target driving amount total value St and the target driving amount difference Rt. The driving amount calculating portion 72 outputs the left target driving amount LRt and the right target driving amount RRt as the drive signal which is the control signal corresponding to the target driving amount, to the driving device 40. It is noted here that since the driving device 40 is PWM-controlled, the drive signal is calculated by the duty ratio. By the driving of the driving device 40 in response to the drive signal, the electric wheel chair 1 travels. Thus, the travelling control of the electric wheel chair 1 is executed by the driving of the driving device 40 in response to the operation of the occupant of the wheel chair 1.

While the first control device 70 is executing the travelling control, if the occupant of the electric wheel chair 1 moves the operating position of the operating device 60 to the neutral position, the values of the target straight travelling speed "vt" and the target turning speed "wt" become zero and accordingly, the left target driving amount LRt and the right target driving amount RRt become zero. Then, the driving amount of the driving device 40 becomes zero and the movement of the electric wheel chair 1 stops. Thus, the travelling control by the first control device 70 ends.

The second control device 80 includes, as shown in Fig. 2, a failure detecting portion 81 which detects a failure of travelling function and a disconnecting control portion 82 which executes disconnection control to disconnect the electric communication between the driving device 40 and the electric source 20 when the failure of the travelling function is detected by the failure detecting portion 81. The travelling function is the function to make the electric wheel chair 1 travel and this function can be achieved by the above explained electric source 20, the driving device 40, the operating device 60 and the first control device 70 and further the electric source paths Ld and the control signal paths Lc.

The failure detecting portion 81 executes the failure detecting control, wherein when a failure is detected in any of the portions forming the travelling function, the failure detecting portion 81 detects the failure regarding as the failure of the travelling function. The failure detecting portion 81 includes a first speed presuming portion 81a, a second speed presuming portion 81b, a memory portion 81c, a change amount calculating portion 81d, a speed judging portion 81e, a speed difference calculating portion 81f and a failure judging portion 81g.

The first speed presuming portion 81a presumes the straight travelling speed "v" and the turning speed "w" of the electric wheel chair 1 based on the operation signal (desired straight travelling speed "xjs" and the desired turning speed "yjs") sent from the operating device 60. The first speed presuming portion 81a, in concrete, presumes (derives) the first presumed straight traveling speed "ve1" from the obtained desired straight travelling speed "xjs" based on the first map M1 shown in Fig. 4A. The first presumed straight travelling speed "ve1" is the straight travelling speed "v" presumed by the first speed presuming portion 81a. Further, the first speed presuming portion 81a presumes (derives) the first presumed turning speed "we1" from the obtained desired turning speed "yjs" based on the second map M2 shown in Fig. 4B. The first presumed turning speed "we1" is the turning speed "w" presumed by the first speed presuming portion 81a. The presumption of the straight travelling speed "v and the turning speed "w" are made every first predetermined time T1 in which time the operation signal is sent. The first speed presuming portion 81a sends the first presumed straight travelling speed "ve1" and the first presumed turning speed "we1" every first predetermined time T1 to the memory portion 81c. The first presumed straight travelling speed "ve1" and the first presumed turning speed "we1" correspond to the first presumed speed of the invention.

The second speed presuming portion 81b presumes the straight travelling speed "v" and the turning speed "w" of the electric wheel chair 1 based on the detection signal which corresponds to the left actual driving amount LRr and the right actual driving amount RRr detected by the actual driving amount detecting device 50. The second speed presuming portion 81b presumes (derives) the second presumed straight traveling speed "ve2" from the actual driving amount total value Sr which is the total value of the left actual driving amount LRr and the right actual driving amount RRr based on the third map M3. The second presumed straight travelling speed "ve2" is the straight travelling speed "v" presumed by the second speed presuming portion 81b. Further, the second speed presuming portion 81b presumes (derives) the second presumed turning speed "we2" from the actual driving amount difference Rr which is the value obtained by subtracting the right actual driving amount RRr from the left actual driving amount LRr. The second presumed turning speed "we2" is the turning speed "w" presumed by the second speed presuming portion 81b. The presumption of the straight travelling speed "v and the turning speed "w" are made every first predetermined time T1 in which time the detection signal is sent. The second speed presuming portion 81b sends the second presumed straight travelling speed "ve2" and the second presumed turning speed "we2" every first predetermined time T1 to the memory portion 81c. The second presumed straight travelling speed "ve2" and the second presumed turning speed "we2" correspond to the second presumed speed of the invention.

The memory portion 81c memorizes therein the presumed straight travelling speed "ve1" and "ve2" and the presumed turning speed "we1" and "we2" sent every first predetermined time T1 as the time series data. The change amount calculating portion 81d calculates respective change amounts of the presumed straight travelling speed "ve1" and "ve2" and the presumed turning speed "we1" and "we2" using the time series data memorized in the memory portion 81c. In more detail, the change amount calculating portion 81d calculates the absolute value of the difference between the first presumed straight travelling speed "ve1" at current time and the first presumed straight travelling speed "ve1" at the time before the first predetermined time T1 from the current time, as the first straight travelling speed change amount Cv1 which corresponds to the change amount of the first presumed straight travelling speed "ve1". Similarly, the change amount calculating portion 81d calculates the first turning speed change amount Cw1 which corresponds to the change amount of the first presumed turning speed "we1", the second straight traveling change amount Cv2 which corresponds to the change amount of the second presumed straight travelling speed "ve2" and the second turning speed change amount Cw2 which corresponds to the change amount of the second presumed turning speed "we2". It is noted that the straight travelling speed change amount Cv1 and Cv2 and the turning speed change amount Cw1 and Cw2 are obtained as the absolute values and therefore, the obtained values are positive values. The change amount calculating portion 81d calculates the straight travelling speed change amount Cv1 and Cv2 and the turning speed change amount Cw1 and Cw2, every first predetermined time T1.

The speed judging portion 81e judges whether or not the speed of the electric wheel chair 1 is in stable. The state that the speed of the electric wheel chair 1 is in stable indicates the state that the electric wheel chair 1 is travelling with a nearly constant straight travelling speed "v" and at the same time the state that the electric wheel chair 1 is turning with a nearly constant turning speed "w". In more detail, the speed judging portion 81e judges whether or not the first and the second straight travelling speed change amounts Cv1 and Cv2 keep the value consecutively equal to or less than the straight travelling change amount judging value Hcv for the second predetermined time period (corresponding to the predetermined time of the invention). The second predetermined time is set to be longer than the first predetermined time T1. The second predetermined time is, for example, set to three (3) seconds and the straight travelling change amount judging value Hcv is for example, set to 0.5 km / h. Further, the speed judging portion 81e judges whether or not the first and the second turning speed change amounts Cw1 and Cw2 keep the value equal to or less than the turning change amount judging value Hcw. The turning change amount judging value Hcw is for example set to π / 2 (rad / second).

The speed judging portion 81e judges that the speed of the electric wheel chair 1 is in stable, when the first straight travelling speed change amount Cv1 and the second straight travelling speed change amount Cv2 are equal to or less than the straight travelling change amount judging value Hcv and at the same time when the first turning speed change amount Cw1 and the second turning speed change amount Cw2 are equal to or less than the turning change amount judging value Hcw consecutively for the second predetermined time. The straight travelling change amount judging value Hcv and the turning change amount judging value Hcw correspond to the change amount judging value of the invention.

The speed difference calculating portion 81f calculates the difference in speed between the first presumed straight travelling speed "ve1" and the second presumed straight travelling speed "ve2" for the second predetermined time and the difference in speed between the first presumed turning speed "we1" and the second presumed turning speed "we2" when the speed of the electric wheel chair 1 is judged to be in stable by the speed judging portion 81e. In more detail, the speed difference calculating portion 81f calculates the difference in average value between the first presumed straight travelling speed "ve1" and the second presumed straight travelling speed "ve2" based on the time series data between the time when the speed of the electric wheel chair 1 is judged to be in stable by the speed judging portion 81e and the time the second predetermined time back therefrom, as the first straight travelling speed difference Dv1. The speed difference calculating portion 81f calculates the difference in average value between the first presumed turning speed "we1" and the second presumed turning speed "we2" based on the time series data between the time when the speed of the electric wheel chair 1 is judged to be in stable by the speed judging portion 81e and the time the second predetermined time back therefrom, as the first turning speed difference Dw1. The first straight travelling speed difference Dv1 and the first turning speed difference Dw1 correspond to the speed difference of the invention.

The failure judging portion 81g judges whether or not a failure exists in the travelling function. In more detail, the failure judging portion 81g judges that a failure exists in the travelling function when the first straight travelling speed difference Dv1 is equal to or more than the first straight travelling difference judging value Hdv1. The first straight travelling speed difference judging value Hdv1 is for example, set to one (1) km / h. Further, it is noted that the failure judging portion 81g judges that a failure exists in the travelling function when the first turning speed difference Dw1 is equal to or more than the first turning speed difference judging value Hdw1. The first straight travelling difference judging value Hdv1 and the first turning speed difference judging value Hdw1 correspond to the speed difference value of the invention.

Further, the electric wheel chair 1 further includes a connecting unit 90 which is formed by the second control device 80 and the disconnecting device 30. According to the embodiment, the second control device 80 and the disconnecting device 30 of the disconnecting unit 90 are formed integrally, as shown in Figs. 1 and 2. The disconnecting unit 90 is assembled into the electric wheel chair 1 by being electrically connected thereto. In detail, as shown in Fig. 2, the second control device 80 is detachably electrically connected to the electric source 20, the actual driving amount detecting device 50 and the operating device 60 via, for example, respective relay connectors CN (See Fig. 2). Further, the disconnecting device 30 is detachably electrically connected to the electric source 20 and the driving device 40 via, for example, the respective relay connectors CN.

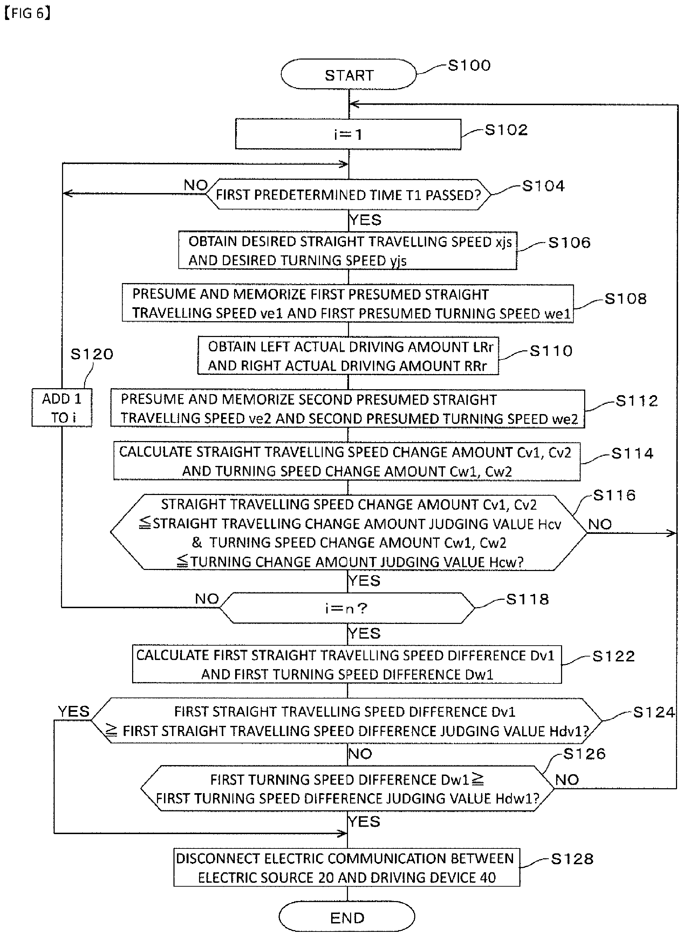

Next, the failure detecting control and the disconnecting control executed by the second control device 80 will be explained with reference to the flowchart indicated in Fig. 6. The second control device 80 closes the disconnecting device 30 to establish electric connection between the electric source 20 and the driving device 40 thereby to execute the failure detecting control and the disconnecting control when the electric wheel chair 1 is activated and the electric power is supplied thereto. First, the travelling control will be explained in the case where no failure is generated in the electric wheel chair 1 and the speed (straight travelling speed "v" and the turning speed "w") of the electric wheel chair 1 is in a stable state.

The second control device 80 sets the variable "i" to the initial value "1" at the step S102. The variable "i" is the variable used for measuring the second predetermined time. The second control device 80 judges whether or not the first predetermined time T1 has passed at the step S104. If the first predetermined time T1 has not passed, the second control device 80 judges "NO" at the step S104 and executes the process of step S104 repeatedly. On the other hand, if the first predetermined time T1 has passed, the second control device 80 judges "YES" at the step S104 and advances the program to the step S106.

The second control device 80 obtains the desired straight travelling speed "xjs" and the desired turning speed "yjs" which are sent from the operating device 60 at the step S106. The second control device 80 presumes the first presumed straight travelling speed "ve1" and the first presumed turning speed "we1" from the desired straight travelling speed "xjs" and the desired turning speed "yjs" (first speed presuming portion 81a) and memorizes them as the time series data (memory portion 81c) at the step S108.

The second control device 80 obtains the left actual driving amount LRr and the right actual driving amount RRr sent from the actual driving amount detecting device 50 at the step S110. The second control device 80 presumes the second presumed straight travelling speed "ve2" and the second presumed turning speed "we2" from the left actual driving amount LRr and the right actual driving amount RRr (second speed presuming portion 81b) and memorizes them as the time series data (memory portion 81c) at the step S112.

The second control device 80 calculates the straight travelling speed change amount Cv1 and Cv2 and the turning speed change amount Cw1 and Cw2 using the time series data at the step S114 (change amount calculating portion 81d). The second control device 80 judges whether or not the first straight travelling speed change amount Cv1 and the second straight travelling speed change amount Cv2 are equal to or less than the straight travelling change amount judging value Hcv and at the same time whether or not the first turning speed change amount Cw1 and the second turning speed change amount Cw2 are equal to or less than the turning change amount judging value Hcw (speed judging portion 81e) at the step S116. If the speed of the electric wheel chair 1 is in a stable state, the values of the straight travelling speed change amount Cv1 and Cv2 and the turning speed change amount Cw1 and Cw2 are relatively small and accordingly, the straight travelling speed change amounts Cv1 and Cv2 are equal to or less than the straight travelling change amount judging value Hcv and the turning speed change amounts Cw1 and Cw2 are equal to or less than the turning change amount judging value Hcw. Accordingly, the second control device 80 judges "YES" at the step S116 and advances the program to the step S118.

The second control device 80 judges whether or not the straight travelling speed change amounts Cv1 and Cv2 maintain the value equal to or less than the straight travelling change amount judging value Hcv and at the same time judges whether or not the turning speed change amounts Cw1 and Cw2 maintain the value equal to or less than the turning change amount judging value Hcw, consecutively for the second predetermined time at the step S118 (speed judging portion 81e). In more detail, the second control device 80 judges whether or not the variable "i" agrees with the first predetermined value "n". According to the embodiment, the second predetermined time is set to be "n" time of the first predetermined time T1 (Second predetermined time = first predetermined time T1 × "n"). In other words, at the step S118, when the variable "i" becomes the first predetermined value "n", the second predetermined time has passed from the time the variable is initialized to the value "i" at the step S102. When the second predetermined time has not passed (the value "i" is not "n"), the second control device 80 judges "NO" at the step S118 and the second control device 80 adds one (1) to the value "i" at the step S120. Then the program returns to the step S104. The second control device 80 repeats the processes of the step S104 to the step S120 repeatedly until the second predetermined time elapse.

On the other hand, the second control device 80 judges that the speed of the electric wheel chair 1 is in a stable state at the step S118, when the variable "i" becomes the value "n", in other words, when the straight travelling speed change amounts Cv1 and Cv2 maintain the value equal to or less than the straight travelling change amount judging value Hcv and at the same time when the turning speed change amounts Cw1 and Cw2 maintain the value equal to or less than the turning change amount judging value Hcw, consecutively for the second predetermined time. Accordingly, in this situation, the second control device 80 judges "YES" at the step S118 and advances the program to the step S122. It is noted that within the predetermined second time (before the variable "i" reaches to "n"), for example, if the occupant of the chair 1 operates the operating device 60 and the desired straight travelling speed "xjs" is changed, the first straight travelling speed change amount Cv1 becomes larger than the straight travelling change amount judging value Hcv. Then the second control device 80 judges that the speed of the electric wheel chair 1 is not in a stable state and judges "NO" at the step S116 to return the program to the step S102. Thus, the measuring of the second predetermined time starts again. The second control device 80 executes the processes of the steps S104 to S120, repeatedly.

The second control device 80 calculates the first straight travelling speed difference Dv1 and the first turning speed difference Dw1 at the step S122 (speed difference calculating portion 81f). Then, the second control device 80 judges whether or not a failure exists in the travelling function. In detail, the second control device 80 judges whether or not the first straight travelling speed difference Dv1 is equal to or more than the first straight travelling speed difference judging value Hdv1 (failure judging portion 81g). When the speed of the electric wheel chair 1 is in a stable state and a failure does not exist in the travelling function of the electric wheel chair 1, the difference between the first presumed straight travelling speed "ve1" and the second presumed straight travelling speed "ve2" is relatively small and accordingly, when the first straight travelling speed difference Dv1 is smaller than the first straight travelling speed difference judging value Hdv1, the second control device 80 judges that a failure does not exist in the travelling function. Then, the second control device 80 judges "NO" at the step S124 and advances the program to the step S126.

Further, at the step S126, the second control device 80 judges whether or not a failure exists in the travelling function. In detail, the second control device 80 judges whether or not the first turning speed difference Dw1 is equal to or more than the first turning speed difference judging value Hdw1 (failure judging portion 81g). When the speed of the electric wheel chair 1 is in a stable state and a failure does not exist in the travelling function of the electric wheel chair 1, the difference between the first presumed turning speed "we1" and the second presumed turning speed "we2" is relatively small and accordingly, when the first turning speed difference Dw1 is smaller than the first turning speed difference judging value Hdw1, the second control device 80 judges that a failure does not exist in the travelling function. Then, the second control device 80 judges "NO" at the step S126 and returns the program to the step S102. As explained above, when the speed of the electric wheel chair 1 is in a stable state, the second control device 80 judges whether a failure exists in the travelling function every second predetermined time.

Next, for example, a failure of the travelling function under the following situation will be explained hereinafter, wherein when a failure occurs at the left driving device 41, the left actual driving amount LRr of the left driving device 41 becomes insufficient relative to the drive signal corresponding to the left target driving amount LRt which corresponds to the desired straight travelling speed "xjs" and the desired turning speed "yjs" and the straight travelling speed "v" becomes small relative to the target straight travelling speed "vt". Under such situation above, the second control device 80 executes the processes of the steps S102 to the step S120. Further, even a failure occurs at the left driving device 41, the values of the straight travelling speed change amounts Cv1 and Cv2 and the turning speed change amounts Cw1 and Cw2 are relatively small and the straight travelling speed change amounts Cv1 and Cv2 maintain the value equal to or less than the straight travelling change amount judging value Hcv and at the same time the turning speed change amounts Cw1 and Cw2 maintain the value equal to or less than the turning change amount judging value Hcw, consecutively for the second predetermined time. In this situation, the second control device 80 judges "YES" at the step S118 and calculates the first straight travelling speed difference Dv1 and the first turning speed difference Dw1 at the step S122.

Due to a failure occurred at the left driving device 41, when the left actual driving amount LRr of the left driving device 41 relative to the drive signal corresponding to the left target driving amount LRt becomes insufficient, the second presumed travelling speed "ve2" which is presumed from the left actual driving amount LRr and the right actual driving amount RRr becomes small compared to the first presumed straight travelling speed "ve1" which is presumed from the desired straight travelling speed "xjs". Therefore, the first straight travelling speed difference Dv1 becomes relatively large and when the first straight travelling speed difference Dv1 becomes equal to or more than the first straight travelling speed difference judging value Hdv1 and the second control device 80 judges that a failure exists in the travelling function at the step S124. Accordingly, the second control device 80 judges "YES" at the step S124 and advances the program to the step S128.

The second control device 80 disconnect the electric connection between the electric source 20 and the driving device 40 by the disconnecting device 30 at the step S128 (disconnecting control portion 82). In detail, the second control device 80 opens the disconnecting device 30 to disconnect the supply of electric power from the electric source 20 to the driving device 40. Thus, the driving operation of the driving device 40 stops and accordingly, the operation of the electric wheel chair 1 stops to improve the safety of the occupant of the electric wheel chair 1.

It is noted that even when a failure exists in the left driving device 41, if the first straight travelling speed difference Dv1 is smaller than the first straight travelling speed difference judging value Hdv1, the second control device 80 judges "NO" at the step S124 and due to the failure at the left driving device 41, the second presumed turning speed "we2" becomes small relative to the first presumed turning speed "we1". Accordingly, when the first turning speed difference Dw1 becomes equal to or larger than the first turning speed difference judging value Hdw1, the second control device 80 judges that a failure exists in the traveling function at the step S126. In this case, the second control device 80 judges "YES" at the step S126 and disconnects the electric connection between the electric source 20 and the driving device 40 by the disconnecting device 30 at the step S128.

Further, not only when the failure exists at the left driving device 41, but also when a failure exists at the devices that form the travelling function such as, the operating device 60, or the electric power paths Ld, for example, the second presumed turning speed "we2" becomes small relative to the first presumed turning speed "we1" and similar to the case when the first turning speed difference Dw1 becomes equal to or more than the first turning speed difference judging value Hdw1, the second control device 80 disconnects the electric connection between the electric source 20 and the driving device 40 by the disconnecting device 30.

According to the embodiment, the electric wheel chair 1, having a travelling function, travels by a driving device 40 which is connected to an electric source 20 and is driven according to an operation signal which corresponds to an operation amount to an operating device 60 operated by an occupant. The electric wheel chair 1 includes a disconnecting device 30 which electrically connects or disconnects the electric source 20 with or from the driving device 40, an actual driving amount detecting device 50 which detects an actual driving amount which corresponds to an actual driving amount LRr and RRr of the driving device 40, a first control device 70 having a speed calculating portion 71 and a driving amount calculating portion 72 for controlling a travelling of the electric wheel chair 1 by setting a target driving amount LRt and RRt of the driving device 40 based on the operation signal sent from the operating device 60 and outputting a drive signal which corresponds to the target driving amount LRt and RRt to the driving device 40, a second control device 80 having a failure detecting portion 81 which detects a failure in the traveling function and a disconnecting control portion 82 which electrically disconnects the driving device 40 from the electric source 20 by the disconnecting device 30 when the failure in the travelling function is detected by the failure detecting portion. The failure detecting portion 81 includes a first speed presuming portion 81a which presumes a straight travelling speed "v" and a turning speed "w" of the electric wheel chair 1 based on the operation signal sent from the operating device 60, a second speed presuming portion 81b which presumes the straight travelling speed "v" and the turning speed "w" of the electric wheel chair 1 based on the detection signal corresponding to the actual driving amount LRr and RRr detected by the actual driving amount detecting device 50, a speed difference calculating portion 81f which calculates a first straight travelling speed difference Dv1 which is a difference between a first presumed straight travelling speed "ve1" which corresponds to the straight travelling speed "v" of the electric wheel chair 1 presumed by the first speed presuming portion 81a and a second presumed straight travelling speed "ve2" which corresponds to the straight travelling speed v" of the electric wheel chair 1 presumed by the second speed presuming portion 81b and a first turning speed difference Dw1 which is a difference between a first presumed turning speed "we1" which corresponds to the turning speed "w" of the electric wheel chair 1 presumed by the first speed presuming portion 81a and a second presumed turning speed "we2" which corresponds to the turning speed "w" of the electric wheel chair 1 presumed by the second speed presuming portion 81b and a failure judging portion 81g which judges that a failure exists in the travelling function when the first straight travelling speed difference Dv1 calculated by the speed difference calculating portion 81f is equal to or more than a first straight travelling speed judging value Hdv1 or when the first turning speed difference Dw1 is equal to or more than a first turning speed difference judging value Hdw1.

According to the structure above, when a failure occurs at the driving device 40 forming the travelling function of the wheel chair 1 or at an electric power supply state for supplying the devices with the electric power, one of the first straight travelling speed difference Dv1 which is the speed difference between the first presumed speed "ve1" and "we1" of the electric wheel chair 1 presumed based on the control signal sent from the operating device 60 and the second presumed speed "ve2" and "we2" of the electric wheel chair 1 presumed based on the detecting signal detected by the actual driving amount detecting device 50 and the first turning speed difference Dw1 becomes large compared to the case when the failure does not occur at the driving device 40 or the like. The second control device 80 detects the occurrence of the failure at the travelling function of the electric wheel chair 1 when the first straight travelling speed difference Dv1 is equal to or more than the first straight travelling speed difference judging value Hdv1, or when the first turning speed difference Dw1 is equal to or more than the first turning speed difference judging value Hdw1 and disconnects the electric power supply to the driving device 40. Accordingly, the electric wheel chair 1 according to the embodiment can detect a failure of the travelling function without providing a plurality of sensors and a double system of sub-system, which are provided in the conventional electric wheel chair 1. This can achieve less expensive failure detection travelling function of the electric wheel chair 1.

As explained, when the failure detecting portion 81 is not provided in the electric wheel chair 1, it may be necessary to have a relatively high reliability components forming the travelling function in order to extremely reduce the frequency of failure generation of the travelling function. In this case, the electric wheel chair 1 becomes high in cost due to the increase of the cost of the parts and high cost or the electric wheel chair 1 becomes large in size due to the size increase of the parts thereof. To these issues of the conventional electric wheel chair, the electric wheel chair 1 having the failure detecting portion 81 can be structured by the parts with relatively low in cost and with a reasonable reliability except the structure of the failure detecting portion 81. By improving the reliability for the travelling function by the structure of the failure detecting portion 81, the electric wheel chair 1 with low cost and small in size can be achieved.

The electric wheel chair 1 further includes the first control device 70 which includes the speed calculating portion 71 and the driving amount calculating portion 72 and the second control device 80 which includes the failure detecting portion 81 and the disconnecting control portion 82 and further, includes a connecting unit 90 which is formed by the second control device 80 and the disconnecting device 30. The disconnecting unit 90 is assembled into the electric wheel chair 1 by being electrically connected thereto.

According to the structure above, by separating the disconnecting unit 90 formed by the second control device 80 including the failure detecting portion 81 for detecting a failure of the travelling function of the electric wheel chair 1 and the disconnecting device 30, electrically from the electric wheel chair 1, the disconnecting unit 90 can be independent form the electric wheel chair 1. As explained, by electrically detachably connecting the disconnecting unit 90 and the first control device 70 via the connectors or the like, the disconnecting unit 90 can be attached to the electric wheel chair 1 as an optional part which can be post-installed. Therefore, by electrically adding the disconnecting unit 90 to the electric wheel chair 1 which is not equipped with the failure detecting portion 81 and the disconnecting device 30, an electric wheel chair with the failure portion 81 and the disconnecting device 30 can be provided. It is further noted that the maintenance service for the disconnecting unit 90 can be relatively easily or simply made.

The failure detecting portion 81 further includes the change amount calculating portion 81d which calculates the straight travelling speed change amount Cv1 and Cv2 which are the change amount of the presumed straight travelling speed "ve1" and "ve2" and the presumed turning speed "we1" and "we2" and the speed judging portion 81e which judges that the speed of the electric wheel chair 1 is in a stable state when the straight travelling speed change amounts Cv1 and Cv2 which are calculated by the change amount calculating portion 81d maintain the value equal to or less than the straight travelling change amount judging value Hcv consecutively for the second predetermined time and at the same time when the turning speed change amounts Cw1 and Cw2 maintain the value equal to or less than the turning change amount judging value Hcw consecutively for the second predetermined time. The speed difference calculating portion 81f calculates the first straight travelling speed difference Dv1 between the first presumed straight travelling speed "ve1" and the second presumed straight travelling speed "ve2" and the first turning speed difference Dw1 between the first presumed turning speed "we1" and the second presumed turning speed "we2" for the second predetermined time, when the speed of the electric wheel chair 1 is judged to be in a stable state by the speed judging portion 81e.

According to the structure above, when the speed of the electric wheel chair 1 is in a stable state, the speed change amountCv1, Cv2, Cw1 and Cw2 becomes relatively small. In such situation, when the straight travelling speed change amount Cv1 and Cv2 is equal to or less than the straight travelling change amount judging value Hcv consecutively for the second predetermined time and at the same time when the turning speed change amount Cw1 and Cw2 is equal to or less than the turning change amount judging value Hcw consecutively for the second predetermined time, the second control device 80 judges that the straight travelling speed "v" and the turning speed "w" of the electric wheel chair 1 are in stable state. Then, the second control device 80 calculates the first straight travelling speed difference Dv1 and the first turning speed difference Dw1 in the second predetermined time and judges whether or not a failure exists in the travelling function of the electric wheel chair 1. Accordingly, since the electric wheel chair 1 judges whether or not a failure exists in the travelling function when the speed of the electric wheel chair 1 is in a stable state, the accuracy of a failure judgement of the travelling function can be improved.

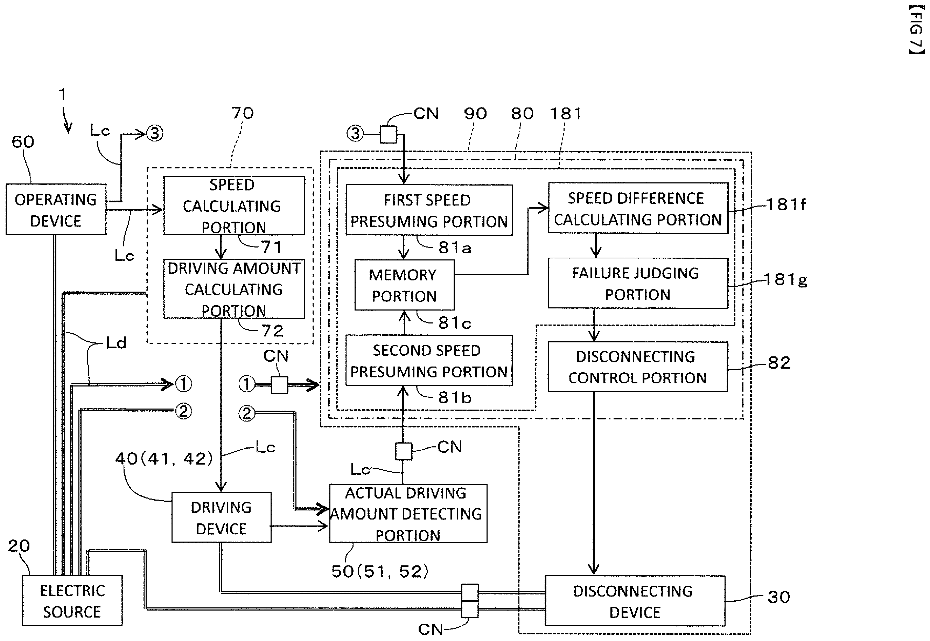

Next, a modified embodiment, not being part of the invention, of the above embodiment of the invention will be explained but, mainly the portions different from the above embodiment will be explained. Instead of using the failure detecting portion 81 of the second control device 80 according to the embodiment, the second control device 180 includes a failure detecting portion 181, as shown in Fig. 7. The failure detecting portion 181 does not have the change amount calculating portion 81d and the speed judging portion 81e, as is different from the failure detecting portion 81 of the embodiment. Further, instead of using speed difference calculating portion 81f and the failure judging portion 81g of the failure detecting portion 81, the failure detecting portion 181 includes a speed difference calculating portion 181f and a failure judging portion 181g.

The speed difference calculating portion 181f calculates the speed difference between the first presumed straight travelling speed "ve1" and the second presumed straight travelling speed "ve2" at a current time as the second straight travelling speed difference Dv2, Further, the speed difference calculating portion 181f calculates the speed difference between the first presumed turning speed "we1" and the second presumed turning speed "we2" at the current time as the second turning speed difference Dw2.

The failure judging portion 181g judges that a failure exists in the travelling function when the second straight travelling speed difference Dv2 calculated by the speed difference calculating portion 181f maintains the value equal to or more than the second straight travelling speed difference judging value Hdv2, consecutively for a third predetermined time. The third predetermined time is set to the time longer than the first predetermined time T1. The third predetermined time is, for example, five seconds. The second straight travelling speed difference judging value Hdv2 is for example set to 1 (km / h). Further, the failure judging portion 181g judges that a failure exists in the travelling function when the second turning speed difference Dw2 calculated by the speed difference calculating portion 181f maintains the value equal to or more than the second turning speed difference judging value Hdw2, consecutively for the third predetermined time.

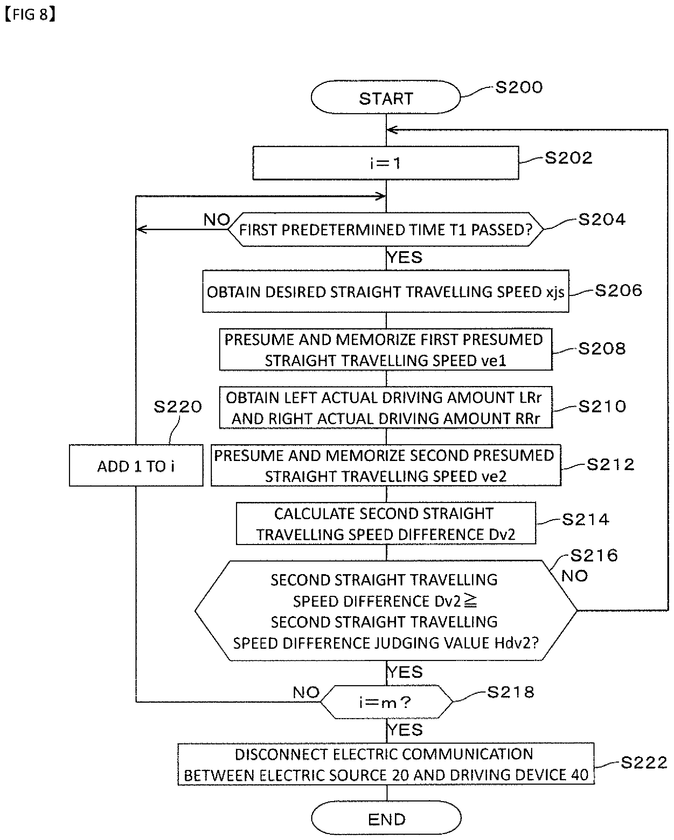

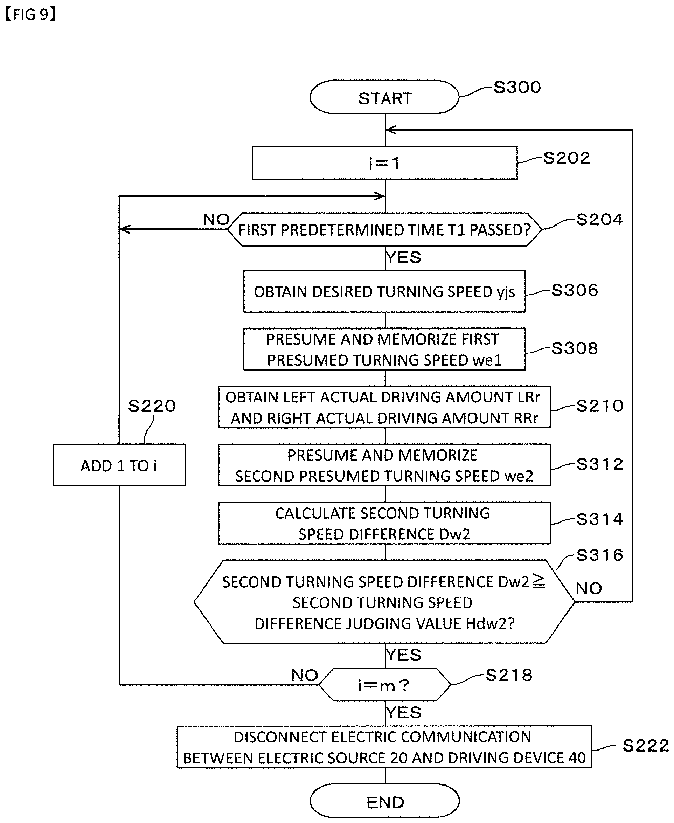

The second control device 180 according to the modified embodiment executes the failure detecting control and the disconnecting control based on the flowcharts shown in Figs. 8 and 9, instead of the flowcharts shown in Fig. 6 executed by the second control device 80. When the failure detecting control is executed according to the program shown in the flowcharts in Fig. 8, if the second straight travelling speed difference Dv2 maintains the value equal to or more than the second straight travelling speed difference judging value Hdv2, consecutively for the third predetermined time, a failure is judged to be existing in the travelling function. In detail, the second control device 180 sets the variable "i" to the initial value "1" at the step S202. and judges whether or not the first predetermined time T1 has passed at the step S204. If the first predetermined time T1 has not passed, the second control device 180 judges "NO" at the step S204 and executes the process of step S204 repeatedly. On the other hand, if the first predetermined time T1 has passed, the second control device 180 judges "YES" at the step S204 and advances the program to the step S206.

The second control device 180 obtains the desired straight travelling speed "xjs" at the step S206 and presumes the first presumed straight travelling speed "ve1" and memorizes the value at the step S208 (first speed presuming portion 81a). Further, the second control device 180 obtains the left actual driving amount LRr and the right actual driving amount RRr at the step S210 and presumes the second presumed straight travelling speed "ve2" at the step S212 (second speed presuming portion 81b). The second control device 180 calculates the second straight travelling speed difference Dv2 at the step S214 (speed difference calculating portion 181f) and confirms whether or not the second straight travelling speed difference Dv2 is equal to or more than the second straight travelling speed difference judging value Hdv2 at the step S216.

Under the case where a failure does not exist in the travelling function, the second straight travelling speed difference Dv2 is relatively small and is less than the second straight travelling speed difference judging value Hdv2. Then the second control device 180 judges "NO" at the step S216 and returns the program to the step S202. As explained above, when any failure is not existing, the second control device 180 repeatedly executes the processes of the steps S202 through S216. On the other hand, when a failure in the travelling function is detected in the driving device 40 for example, the second straight travelling speed difference Dv2 becomes large and becomes equal to or more than the second straight travelling speed difference judging value Hdv2. Then, the second control device 180 judges "YES" at the step S216 and advances the program to the step S218.

The second control device 180 judges whether or not the variable "i" agree with the second predetermined value "m". According to this modified embodiment, the third predetermined time is set to be "m" time of the first predetermined time T1 (third predetermined time = first predetermined time T1 × "m"). In other words, at the step S218, when the variable "i" becomes the second predetermined value "m", the third predetermined time has passed from the time the variable is initialized to the initial value "i" at the step S202. When the third predetermined time has not passed (the value "i" is not "m"), the second control device 180 judges "NO" at the step S218 and the second control device 80 adds one (1) to the value "i" at the step S220. Then the program returns to the step S204. When the second straight traveling speed difference Dv2 maintains the value equal to or more than the second straight travelling speed difference judging value Hdv2 consecutively, the second control device 180 repeats the processes of the step S204 to the step S220 repeatedly until the third predetermined time elapses.

The second control device 180 judges at the step S218 that a failure exists in the travelling function when the variable "i" becomes the value "m", i.e., when the second straight traveling speed difference Dv2 maintains the value equal to or more than the second straight travelling speed difference judging value Hdv2, consecutively for the third predetermined time (failure judging portion 181g). In this case, the second control device 180 judges "YES" at the step S218 and disconnects the electric connection between the electric source 20 and the driving device 40 at the step S222 (disconnecting control portion 82).

Further, when the failure detecting control is executed according to the flowchart shown in Fig. 9, when the second turning speed difference Dw2 maintains the value equal to or more than the second turning speed difference judging value Hdw2, consecutively for the third predetermined time, a failure is judged to be existing in the travelling function. Regarding to the explanation of the flowchart shown in Fig. 9, only the portions which are different from the flowchart shown in Fig. 8 will be made hereinafter. The second control device 180 obtains the desired turning speed "yjs" at the step S306 and presumes the first presumed turning speed "we1" and memorizes the value at the step S308 (first speed presuming portion 81a). Further, the second control device 180 presumes and memorizes the second presumed turning speed "we2" at the step S312 (second speed presuming portion 81b). The second control device 180 calculates the second turning speed difference Dw2 at the step S314 and confirms whether or not the second turning speed difference Dw2 is equal to or more than the second turning speed difference judging value Hdw2 at the step S316.

According to the embodiment explained above, one example of the movable body is explained, but the invention is not limited to this example. For example, in the above embodiment, the movable body is explained as the electric wheel chair 1, but instead of the electric wheel chair, a boarding type movable body, such as, for example, a small size (compact) vehicle or a movable robot can be applied to the invention. Further, the operating device 60 is explained as a joystick type device according to the above embodiment, but instead of the joystick type, the operating device 60 may be formed by an acceleration which instructs the traveling speed and a steering wheel which instructs the turning direction of the electric wheel chair 1.

It is further noted that according to the embodiment explained above, the difference in average value between the first presumed straight travelling speed "ve1" and the second presumed straight travelling speed "ve2" within the second predetermined time is defined as the first straight travelling speed difference Dv1. However, instead of this definition, the straight travelling speed difference Dv1 can be defined as the difference in maximum value between the first presumed straight travelling speed "ve1" and the second presumed straight travelling speed "ve2". This can be the same with the definition of the first turning speed difference Dw1.

It is still further noted that according to the embodiment explained above, the second control device 80 judges the failure in the travelling function by the first straight travelling speed difference Dv1 which is the difference of speed between the first presumed straight travelling speed "ve1" and the second presumed straight travelling speed "ve2". However, instead of this, it may be possible to judge the failure in the traveling function by the difference in the driving amount between the left target driving amount LRt and the left actual driving amount LRr or between the right target driving amount RRt and the right actual driving amount RRr. Under such judgement, the second control device 80 judges that a failure exists in the travelling function, for example, when the difference in the driving amount between the left target driving amount LRt and the left actual driving amount LRr maintains the value which is equal to or more than a predetermined judging value (for example, 50 rpm) consecutively for the third predetermined time.

According to the embodiment above, the second control device 180 judges that the speed of the electric wheel chair 1 is in a stable state, when the straight travelling speed change amounts Cv1 and Cv2 maintain the value equal to or less than the straight travelling change amount judging value Hcv and at the same time when the turning speed change amounts Cw1 and Cw2 maintain the value equal to or less than the turning change amount judging value Hcw, consecutively for the second predetermined time (step S120; speed judging portion 81e). However, instead of this judgement method, the second control device 180 judges that the speed of the electric wheel chair 1 is in a stable state when the straight travelling speed change amounts Cv1 and Cv2 maintain the value equal to or less than the straight travelling change amount judging value Hcv or, when the turning speed change amounts Cw1 and Cw2 maintain the value equal to or less than the turning change amount judging value Hcw, consecutively for the second predetermined time.

Further, in this case, when the straight travelling speed change amounts Cv1 and Cv2 maintain the value equal to or less than the straight travelling change amount judging value Hcv, consecutively for the second predetermined time,
the second control device 180 judges only whether or not the first straight travelling speed difference Dv1 is equal to or more than the first straight travelling speed difference judging value Hdv1 (step S124), without performing the judgement of the first turning speed difference Dw1 (step S126). On the other hand, when the turning speed change amounts Cw1 and Cw2 maintain the value equal to or less than the turning change amount judging value Hcw, consecutively for the second predetermined time, the second control device 180 judges only whether or not the first turning speed difference Dw1 is equal to or more than the first turning speed difference judging value Hdw1 (step S126), without performing the judgement of the first straight travelling speed difference Dv1 (step S124). It is still further noted that whether or not the speed of the electric wheel chair 1 is in a stable state when one of the straight travelling speed change amounts Cv1 and Cv2 maintains the value equal to or less than the straight travelling change amount judging value Hcv consecutively for the second predetermined time. This is the same with the cases of the turning speed change amounts Cw1 and Cw2.

Further, according to the embodiment above, the disconnecting unit 90 is formed by integrally forming the disconnecting device 30 and the second control device 80. However, instead of this, the disconnecting device 30 and the second control device 80 are separately formed. The first control device 70 and the second control device 80 are formed separately according to the embodiment above, however, the first control device 70 and the second control device 80 may be formed integrally.

Further, according to the embodiment, the first control device 70 and the second control device 80 are independently communicably connected with the operating device 60. However, instead of this structure, the operating device 60, the first control device 70 and the second control device 80 are mutually communicably connected through for example, CAN (Controller Area Network) or the like. In this case, all of the devices such as the disconnecting device 30 and the driving device 40 which form the traveling function may be mutually communicably connected through CAN or the like.

Further, within the scope of the subject matter of the invention, the number of the driving device 40, location positions of the devices, routes of the electric source path Ld and the control signal path Lc and the calculation method of the speed difference may be appropriately changed.

### [Brief Explanation of Symbols and Signs]

1; electric wheel chair, 20; electric source, 30; disconnecting device, 40; driving device, 50; actual driving amount detecting device, 60; operating device, 70; first control device, 71; speed calculating portion (travelling control portion), 72; driving amount calculating portion (travelling control portion), 80; second control device, 81; failure detecting portion, 81a; first speed presuming portion, 81b; second speed presuming portion, 81d; change amount calculating portion, 81e; speed judging portion, 81f; speed difference calculating portion, 81g; failure judging portion, 82; disconnecting control portion, 90; disconnecting unit, Cv1, Cv2; straight travelling speed change amount (change amount), Cw1, Cw2; turning speed change amount (change amount), Dv1, Dv2; straight travelling speed difference (speed difference), Dw1, Dw2; turning speed difference (speed difference), Hcv; straight travelling change amount judging value (change amount judging value), Hcw; turning change amount judging value (change amount judging value), Hdv1, Hdv2; straight travelling speed difference judging value (speed difference judging value), Hdw1, Hdw2; turning speed difference judging value (speed difference judging value), LRr, RRr; actual driving amount, LRt, RRt; target driving amount, "v"; straight travelling speed (speed), "ve1"; first presumed straight travelling speed (first presumed speed), "ve2"; second presumed straight travelling speed (second presumed speed), "w"; turning speed (speed), "we1"; first presumed turning speed (first presumed speed), "we2"; second presumed turning speed (second presumed speed).

## Claims

1. A movable body that is adapted to travel by an operation of an occupant thereof, the movable body having a travelling function and being adapted to travel by a driving device (40) which is connected to an electric source (20), adapted to be driven according to an operation signal which corresponds to an operation amount to an operating device (60) operated by the occupant of the movable body, and adapted to drive wheels (13a and 13b) of the movable body to rotate, wherein the movable body is one of an electric wheel chair, a compact vehicle or a movable robot and includes:
a disconnecting device (30) adapted to electrically connect or disconnect the electric source (20) with or from the driving device (40);
an actual driving amount detecting device (50) adapted to detect an actual driving amount which corresponds to an actual driving amount (LRr and RRr) of the driving device (40); and a control device which includes a travelling control portion (71 and 72) adapted to set a target driving amount (LRt and RRt) of the driving device (40) based on the operation signal sent from the operating device (60) and control a travelling of the movable body by outputting a drive signal which corresponds to the target driving amount (LRt and RRt) to the driving device (40), a failure detecting portion (81) adapted to detect a failure in the travelling function and a disconnecting control portion (82) adapted to electrically disconnect the driving device (40) from the electric source (20) by the disconnecting device (30) when the failure in the travelling function is detected by the failure detecting portion (81), wherein the failure detecting portion (81) includes:
a first speed presuming portion (81a) adapted to presume a speed (v and w) of the movable body based on the operation signal sent from the operating device (60) every first predetermined time (T1);
a second speed presuming portion (81b) adapted to presume a speed (v and w) of the movable body based on the detection signal corresponding to the actual driving amount (LRr and RRr) detected by the actual driving amount detecting device (50) every first predetermined time (T1);
a memory portion (81c) adapted to memorize therein a first presumed speed (ve1 and we1) which corresponds to the speed (v and w) of the movable body presumed by the first speed presuming portion (81a) and a second presumed speed (ve2 and we2) which corresponds to the speed (v and w) of the movable body presumed by the second speed presuming portion (81b) as a time series data;
a change amount calculating portion (81d) adapted to calculate at least one of the change amounts of the first presumed speed (ve1 and we1) and the second presumed speed (ve2 and
we2) using the time series data;
a speed judging portion (81e) adapted to judge that the speed of the movable body is in a stable state, when the change amount calculated by the change amount calculating portion (81d) maintains a value equal to or less than a change amount judging value consecutively for a second predetermined time which is set to be longer than the first predetermined time (T1);
a speed difference calculating portion (81f) adapted to calculate a speed difference (Dv1 and Dw1) between the first presumed speed (ve1 and we1) and the second presumed speed (ve2 and we2) in the second predetermined time based on the time series data, when the speed of the movable body is judged to be in the stable state by the speed judging portion (81e); and a failure judging portion (81g) adapted to judge that a failure exists in the travelling function when the speed difference (Dv1 and Dw1) calculated by the speed difference calculating portion (81f) is equal to or more than a speed difference judging value (Hdv1 and Hdw1).

2. The movable body according to claim 1, wherein the control device further includes:
a first control device (70) which includes the travelling control portion (71 and 72) and a second control device (80) which includes the failure detecting portion (81) and the disconnecting control portion (82), and wherein the movable body further includes:
a disconnecting unit (90) formed by the second control device (80) and the disconnecting device (30), wherein
the disconnecting unit (90) is assembled into the movable body by being electrically connected thereto.

## Patentansprüche

1. Beweglicher Körper, der zur Fortbewegung durch eine Betätigung eines Insassen desselben angepasst ist, wobei der bewegliche Körper eine Fortbewegungsfunktion aufweist und zur Fortbewegung durch eine Antriebsvorrichtung (40) angepasst ist, die mit einer elektrischen Quelle (20) verbunden ist, zum Antrieb gemäß einem Betätigungssignal, das einem Betätigungsausmaß einer Betätigungsvorrichtung (60), die durch den Insassen des beweglichen Körpers betätigt wird, entspricht, angepasst ist und zum Antreiben von Rädern (13a und 13b) des beweglichen Körpers zur Drehung angepasst ist, wobei der bewegliche Körper ein elektrischer Rollstuhl, ein Kompaktfahrzeug oder ein beweglicher Roboter ist und aufweist:
eine Trennvorrichtung (30), die zum elektrischen Verbinden oder Trennen der elektrischen Quelle (20) mit oder von der Antriebsvorrichtung (40) angepasst ist;
eine Tatsächliches-Antriebsausmaß-Detektionsvorrichtung (50), die zum Detektieren eines tatsächlichen Antriebsausmaßes, das einem tatsächlichen Antriebsausmaß (LRr und RRr) der Antriebsvorrichtung (40) entspricht, angepasst ist; und
eine Steuervorrichtung, die einen Fortbewegungssteuerteil (71 und 72), der zum Einstellen eines Zielantriebsausmaßes (LRt und RRt) der Antriebsvorrichtung (40) basierend auf dem von der Betätigungsvorrichtung (60) gesendeten Betätigungssignal und Steuern einer Fortbewegung des beweglichen Körpers durch Ausgaben eines Antriebssignals, das dem Zielantriebsausmaß (LRt und RRt) entspricht, zu der Antriebsvorrichtung (40) angepasst ist, einen Fehlerdetektionsteil (81), der zum Detektieren eines Fehlers der Fortbewegungsfunktion angepasst ist, und einen Trennsteuerteil (82), der zum elektrisch Trennen der Antriebsvorrichtung (40) von der elektrischen Quelle (20) durch die Trennvorrichtung (30), wenn der Fehler der Fortbewegungsfunktion durch den Fehlerdetektionsteil (81) detektiert wird, angepasst ist, aufweist, wobei der Fehlerdetektionsteil (81) aufweist:
einen ersten Geschwindigkeitsannahmeteil (81a), der zum Annehmen einer Geschwindigkeit (v und w) des beweglichen Körpers basierend auf dem von der Betätigungsvorrichtung (60) gesendeten Betätigungssignal zu jeder ersten vorbestimmten Zeit (Tl) angepasst ist;
einen zweiten Geschwindigkeitsannahmeteil (81b), der zum Annehmen einer Geschwindigkeit (v und w) des beweglichen Körpers basierend auf dem Detektionssignal, das dem tatsächlichen Antriebsausmaß (LRr und RRr), das durch die Tatsächliches-Antriebsausmaß-Detektionsvorrichtung (50) detektiert wird, entspricht, zu jeder ersten vorbestimmten Zeit (Tl) angepasst ist;
einen Speicherteil (81c), der zum Speichern einer ersten angenommenen Geschwindigkeit (vel und wel), die der Geschwindigkeit (v und w) des beweglichen Körpers, die von dem ersten Geschwindigkeitsannahmeteil (81a) angenommen wird, entspricht, und einer zweiten angenommenen Geschwindigkeit (ve2 und we2), die der Geschwindigkeit (v und w) des beweglichen Körpers, die von dem zweiten Geschwindigkeitsannahmeteil (81b) angenommen wird, entspricht, als Zeitreihendaten in demselben angepasst ist;
einen Änderungsausmaßberechnungsteil (81d), der zum Berechnen mindestens eines der Änderungsausmaße der ersten angenommenen Geschwindigkeit (ve1 und wel) und der zweiten angenommenen Geschwindigkeit (ve2 und we2) unter Verwendung der Zeitreihendaten angepasst ist;
einen Geschwindigkeitsbeurteilungsteil (81e), der zum Beurteilen, dass die Geschwindigkeit des beweglichen Körpers in einem stabilen Zustand ist, wenn das von dem Änderungsausmaßberechnungsteil (81d) berechnete Änderungsausmaß für eine zweite vorbestimmte Zeit, die so eingestellt ist, dass sie länger als die erste vorbestimmte Zeit (Tl) ist, einen Wert behält, der kleiner oder gleich einem Änderungsausmaßbeurteilungswert ist angepasst ist;
einen Geschwindigkeitsdifferenzberechnungsteil (81f), der zum Berechnen einer Geschwindigkeitsdifferenz (Dv1 und Dw1) zwischen der ersten angenommenen Geschwindigkeit (ve1 und we1) und der zweiten angenommenen Geschwindigkeit (ve2 und we2) während der zweiten vorbestimmten Zeit basierend auf den Zeitreihendaten, wenn von dem Geschwindigkeitsbeurteilungsteil (81e) beurteilt wird, dass sich die Geschwindigkeit des beweglichen Körpers in dem stabilen Zustand befindet, angepasst ist; und
einen Fehlerbeurteilungsteil (81g), der zum Beurteilen, dass ein Fehler der Fortbewegungsfunktion vorliegt, wenn die von dem Geschwindigkeitsdifferenzberechnungsteil (81f) berechnete Geschwindigkeitsdifferenz (Dv1 und Dw1) größer oder gleich einem Geschwindigkeitsdifferenzbeurteilungswert (Hdv1 und Hdw1) ist, angepasst ist.

2. Beweglicher Körper nach Anspruch 1, bei dem die Steuervorrichtung ferner aufweist:
eine erste Steuervorrichtung (70), die den Fortbewegungssteuerteil (71 und 72) aufweist, und
eine zweite Steuervorrichtung (80), die den Fehlerdetektionsteil (81) und den Trennsteuerteil (82) aufweist, und bei dem der bewegliche Körper ferner aufweist:
eine Trenneinheit (90), die durch die zweite Steuervorrichtung (80) und die Trennvorrichtung (30) gebildet wird, wobei
die Trenneinheit (90) durch elektrisch Verbinden mit demselben in den beweglichen Körper eingebaut ist.

## Revendications

1. Corps mobile qui est adapté pour se déplacer par un fonctionnement d'un de ses occupants, le corps mobile ayant une fonction de déplacement et étant adapté pour se déplacer par un dispositif d'entraînement (40) qui est connecté à une source électrique (20), adapté pour être entraîné selon un signal de fonctionnement qui correspond à une quantité de fonctionnement d'un dispositif de fonctionnement (60) actionné par l'occupant du corps mobile, et adapté pour entraîner des roues (13a et 13b) du corps mobile à tourner, dans lequel le corps mobile est un fauteuil roulant électrique, un véhicule compact ou un robot mobile et comprend :
un dispositif de déconnexion (30) adapté pour connecter ou déconnecter électriquement la source électrique (20) avec ou à partir du dispositif d'entraînement (40) ;
un dispositif de détection de quantité d'entraînement réel (50) adapté pour détecter une quantité d'entraînement réel qui correspond à une quantité d'entraînement réel (LRr et RRr) du dispositif d'entraînement (40) ; et un dispositif de commande qui comprend une partie de commande de déplacement (71 et 72) adaptée pour fixer une quantité d'entraînement cible (LRt et RRt) du dispositif d'entraînement (40) sur la base du signal de fonctionnement envoyé par le dispositif de fonctionnement (60) et pour commander un déplacement du corps mobile en émettant un signal d'entraînement qui correspond à la quantité d'entraînement cible (LRt et RRt) vers le dispositif d'entraînement (40), une partie de détection de défaillance (81) adaptée pour détecter une défaillance dans la fonction de déplacement et une partie de commande de déconnexion (82) adaptée pour déconnecter électriquement le dispositif d'entraînement (40) de la source électrique (20) par le dispositif de déconnexion (30) lorsque la défaillance dans la fonction de déplacement est détectée par la partie de détection de défaillance (81), dans lequel la partie de détection de défaillance (81) comprend :
une première partie de présomption de vitesse (81a) adaptée pour présumer une vitesse (v et w) du corps mobile sur la base du signal de fonctionnement envoyé par le dispositif de fonctionnement (60) à chaque premier temps prédéterminé (T1) ;
une deuxième partie de présomption de vitesse (81b) adaptée pour présumer une vitesse (v et w) du corps mobile sur la base du signal de détection correspondant à la quantité d'entraînement réel (LRr et RRr) détectée par le dispositif de détection de quantité d'entraînement réel (50) à chaque premier temps prédéterminé (T1) ;
une partie de mémoire (81c) adaptée pour y mémoriser une première vitesse présumée (ve1 et we1) qui correspond à la vitesse (v et w) du corps mobile présumée par la première partie de présomption de vitesse (81a) et une deuxième vitesse présumée (ve2 et we2) qui correspond à la vitesse (v et w) du corps mobile présumée par la deuxième partie de présomption de vitesse (81b) en tant que donnée de série chronologique ;
une partie de calcul de quantité de changement (81d) adaptée pour calculer au moins une des quantités de changement de la première vitesse présumée (ve1 et we1) et de la deuxième vitesse présumée (ve2 et we2) en utilisant les données de série chronologique ;
une partie de jugement de vitesse (81e) adaptée pour juger que la vitesse du corps mobile est dans un état stable, lorsque la quantité de changement calculée par la partie de calcul de quantité de changement (81d) maintient une valeur égale ou inférieure à une valeur de jugement de quantité de changement consécutivement pendant un deuxième temps prédéterminé qui est défini comme étant plus long que le premier temps prédéterminé (T1) ; une partie de calcul de différence de vitesse (81f) adaptée pour calculer une différence de vitesse (Dv1 et Dw1) entre la première vitesse présumée (ve1 et we1) et la deuxième vitesse présumée (ve2 et we2) dans le deuxième temps prédéterminé sur la base de données de série chronologique, lorsque la vitesse du corps mobile est jugée être dans l'état stable par la partie de jugement de vitesse (81e) ; et une partie de jugement de défaillance (81g) adaptée pour juger qu'une défaillance existe dans la fonction de déplacement lorsque la différence de vitesse (Dv1 et Dw1) calculée par la partie de calcul de différence de vitesse (81f) est égale ou supérieure à une valeur de jugement de différence de vitesse (Hdv1 et Hdw1).

2. Corps mobile selon la revendication 1, dans lequel le dispositif de commande comprend en outre :
un premier dispositif de commande (70) qui comprend la partie de commande de déplacement (71 et 72) et un deuxième dispositif de commande (80) qui comprend la partie de détection de défaillance (81) et la partie de commande de déconnexion (82), et dans lequel le corps mobile comprend en outre :
une unité de déconnexion (90) formée par le deuxième dispositif de commande (80) et le dispositif de déconnexion (30), dans lequel
l'unité de déconnexion (90) est assemblée dans le corps mobile en y étant connectée électriquement.
